# EUROPÄISCHE PATENTSCHRIFT

(11) **EP 2 922 981 B1**
(45) Veröffentlichungstag und Bekanntmachung des Hinweises auf die Patenterteilung: **11.09.2019**
(21) Anmeldenummer: 13826841.2
(22) Anmeldetag: 20.11.2013
(51) Int. Cl.: C23C 18/12, B05D 5/08, C09D 5/16, C08K 5/06, B32B 17/06, B32B 17/10

(54) **HOCHABRIEBFESTE ANTIKALKSCHICHTEN MIT HOHER CHEMISCHER BESTÄNDIGKEIT**
HIGHLY ABRASION-RESISTANT ANTI-LIME LAYERS WITH HIGH CHEMICAL RESISTANCE
COUCHES ANTI-CALCAIRE À FORTE RÉSISTANCE À L'ABRASION ET RÉSISTANCE CHIMIQUE ÉLEVÉE

(30) Priorität: 21.11.2012 DE 102012022731
(43) Veröffentlichungstag der Anmeldung: 30.09.2015
(73) Patentinhaber: EPG (Engineered nanoProducts Germany) AG, 64347 Griesheim (DE)
(72) Erfinder: ENDRES, Klaus, 66424 Homburg (DE); SCHMIDT, Christian, 66119 Saarbrücken (DE); GENOLET, Luis, 66111 Saarbrücken (DE); KUTZKY, Barbara, 66123 Saarbrücken (DE); SCHNEIDER, Heike, 66399 Saarbrücken (DE)
(74) Vertreter: Held, Stephan
(86) Internationale Anmeldenummer: PCT/EP2013/074298
(87) Internationale Veröffentlichungsnummer: WO 2014/079893

(56) Entgegenhaltungen:
- EP-A1- 0 113 189
- WO-A1-2009/130288
- WO-A2-2011/069663
- CN-C- 100 558 833
- DE-A1-102006 018 938
- DE-A1-102010 011 185
- DE-U1- 20 219 218
- FR-A1- 2 757 501
- FR-A1- 2 806 427
- US-A- 3 971 747
- US-A- 4 533 573

## Beschreibung

Die Erfindung betrifft die Verwendung von speziellen Schichten als Antikalkschichten.

Bei Kalkablagerungen bzw. Kalkaufwachsungen handelt es sich um einen Niederschlag von unlöslichen Karbonaten und Sulfaten aus hartem Wasser, der sich an der Innenseite von Kesseln, Rohrleitungen oder Ventilen, z. B. Sicherheitsventilen, als feste Kruste ansetzt. Die Kalkablagerung und die damit zusammenhängende Schädigung der Kessel- oder Rohrwandung bzw. der Ventile können zu dramatischen Schädigungen bis hin zum Funktionsversagen der Geräte und Bauteile führen.

Die Entstehung von Kalkablagerungen an metallischen oder keramischen Oberflächen hängt von mehreren Faktoren ab, die z.B. in A. H. Howland et al., J. Appl. Chem. 1951, S. 320-327, beschrieben werden. Neben den Inhaltsstoffen, z.B. Salzen wie CaCO₃, die im Wasser enthalten sind, spielen naturgemäß deren Löslichkeitsverhalten, die Keimbildung und das Kristallwachstum eine entscheidende Rolle beim Aufwachsen der Beläge. Ein weiterer entscheidender Parameter ist die chemische, physikalische bzw. mechanische Anhaftung der Verunreinigung an den Oberflächen.

Während die Inhaltsstoffe im Wasser in der Regel bei vielen Anwendungen nicht beeinflusst werden können, kann mit einer geeigneten Beschichtung Einfluß auf die übrigen Parameter genommen werden. Je weniger Kristallisationskeime auf den Oberflächen vorhanden sind oder gebildet werden, desto geringer ist eine Belagbildung. Sollte sich dennoch ein Kalkbelag bilden, läßt sich dieser bei einer schlechten Anhaftung von der Oberfläche leichter entfernen. Diese schlechte Anhaftung kann durch möglichst glatte Oberflächen, wodurch eine kleinere wahre Oberfläche erreicht wird und die Möglichkeit des Festsetzens in Poren, Löchern oder Kratzern verringert oder beseitigt wird, und vor allem durch eine Verhinderung chemischer Adhäsion erreicht werden.

Antikalkbeschichtungen sind Beschichtungen auf einer Oberfläche, die im Vergleich zur Oberfläche ohne eine solche Antikalkschicht Kalkablagerungen auf der Oberfläche verringern oder verhindern und/oder eine erleichterte Entfernung entstandener Kalkbeläge ermöglichen.

Als Beschichtungsmaterialien, die die oben genannten Anforderungen erfüllen, kommen prinzipiell metallische Überzüge, die galvanisch oder über Vakuumtechniken appliziert werden, oder keramische Schichten in Frage. Im Falle der metallischen Überzüge können harte temperaturstabile Schichten erzeugt werden, die in der Regel allerdings nicht transparent sind und für deren Applikation spezielle Anlagen zur Verfügung stehen müssen, deren Integration in Produktionsabläufe aufwendig ist.

Bei den keramischen Schichten erscheinen insbesondere nichtoxidische Materialien geeignet. Diese extrem harten und abriebfesten Schichtmaterialien führen zu einer Glättung der Metalloberfläche und aufgrund des nichtoxidischen Charakters zu einer schlechten Anbindung der Kalkbeläge. Allerdings ist für den Auftrag, der über CVD oder PVD erfolgt, ebenfalls ein aufwendiges und teures Equipment erforderlich.

Dünne, transparente glasartige Schichten auf der Basis von Sol-Gel-Systemen und nanoskaligen Systemen können über Nassbeschichtungsverfahren hergestellt werden. In DE-A-10 2004001097 bzw. WO-A-2005066388 wird eine Beschichtungstechnologie beschrieben, mit der nur wenige µm dünne Schichten auf Metalloberflächen erhalten werden können. Trotz dieser geringen Dicken sind die Schichten sehr abriebfest und können zum Beispiel mit korundhaltigen Scheuerschwämmen nicht verkratzt werden. Derartige Schichten, die die Herstellung anorganischer rissfreier Überzüge auf Glas und Metall erlaubt, können im Gegensatz zu den im Stand der Technik beschriebenen anorganischen Schichten, bei denen eine kritische Schichtdicke von maximal 100 bis 300 nm erreicht werden kann, Schichtdicken von bis zu 10 µm erreichen.

So ist ein Beschichtungssystem für Edelstahl 1.4301 bekannt, das rissfreie transparente glasartige Schichten mit einer Schichtdicke von ca. 5 µm ermöglicht. Die Schichten zeigen nach 1000 Zyklen Taber-Abraser-Test (Reibrad CS-10F, Last 500 g) keinen sichtbaren oder messbaren Abrieb.

Nachteil bei diesen Materialien ist deren für bestimmte Anwendungen unzureichende hydrolytische Stabilität insbesondere bei höheren Temperaturen und deren für bestimmte Anwendungen unzureichende Abriebfestigkeit. D. h. derartige Materialien weisen in sauren aber insbesondere in alkalischen Medien eine begrenzte Beständigkeit auf. Die oben beschriebenen Schichtwerkstoffe können z. B. in verdünnter Natronlauge bei leicht erhöhter Temperatur aufgelöst werden. Somit sind derartige Schichten für die Anwendung unter erhöhten Temperaturen und in alkalischen Medien nur bedingt einsetzbar.

Wie aus der veröffentlichten Sol-Gel-Literatur bekannt ist, kann die chemische Beständigkeit solcher Schichten durch Einsatz von Ionen verbessert werden, die als Vernetzungskatalysatoren wirken. Dies können z. B. sein Eisen, Aluminium, Zirkonium oder Titan. Derartige Zusätze beeinflussen allerdings, wie ebenfalls aus der Sol-Gel Literatur bekannt ist, die Verarbeitungseigenschaften der Beschichtungslacke durch ihre katalytische Vernetzungsbeschleunigung.

WO 2009/130288 A1 betrifft eine Antikalkbeschichtung von Geräten, die in Kontakt mit Wasser sind, wobei die Beschichtung durch Plasmaphasenpolymerisation von einem oder mehreren Silanen erhalten wird.

DE 102010011185 A1 betrifft Gegenstände umfassend eine metallische Oberfläche, die mit einer glas-, glaskeramik- oder keramikartigen Schutzschicht versehen ist, die eine Grundschicht umfassend eine Matrix aus einem Alkali- und/oder Erdalkalisilikat und eine Alkalimetall- und Erdalkalimetall-freie Deckschicht umfassend eine Matrix aus einer oxidischen Siliciumverbindung umfasst.

Die Aufgabe der Erfindung bestand darin, ein Beschichtungssystem als Antikalkbeschichtung für Metall- oder Keramikoberflächen bereitzustellen, das die Anlagerung und das Aufwachsen von Kalkablagerungen verringert oder verhindert und/oder eine leichtere Entfernung von entstandenen Kalkbelägen ermöglicht. Das Beschichtungssystem soll zudem eine transparente, transluzente oder gefärbte Beschichtung ermöglichen und über ein nasschemisches Beschichtungsverfahren aufgetragen werden können. Außerdem sollte es ermöglicht werden, derartige Schichten in Medien einzusetzen, in denen eine hohe hydrolytische Stabilität erforderlich ist. Darüber hinaus sollte das Beschichtungssystem eine hohe Abriebfestigkeit aufweisen.

Die Aufgabe konnte überraschenderweise dadurch gelöst werden durch die Verwendung einer Beschichtung aus einer Schicht umfassend eine anorganisch-organische Hybridmatrix als Antikalkbeschichtung auf mindestens einer Metall- oder anorganischen Oberfläche eines Gegenstands oder Werkstoffs, wobei die Schicht umfassend eine anorganisch-organische Hybridmatrix erhältlich ist durch nasschemisches Aufbringen einer Beschichtungszusammensetzung auf mindestens eine Metalloberfläche oder anorganische Oberfläche des Gegenstands oder Werkstoffs und Härten der Beschichtungszusammensetzung, wobei die Beschichtungszusammensetzung ein Heterokondensat und ein organisches Monomer, Oligomer oder Polymer, das mindestens eine polymerisierbare Gruppe ausgewählt aus Epoxid-, Vinyl-, Acryl- und Methacrylgruppen umfasst, umfasst, und das Heterokondensat ein Metallo- oder Borosiloxan ist und Heteroatomeinheiten von Heteroatomen ausgewählt aus B, AI, Ga, In, Tl, Ge, Ga, Sn, Pb, Ti, Zr, Hf, Sc, Y und La, die über Sauerstoffbrücken in das Siloxangerüst eingebaut sind, und Siloxaneinheiten, bei denen das Siliziumatom eine nicht hydrolysierbare organische Gruppe, bevorzugt eine nicht hydrolysierbare organische polymerisierbare Gruppe, aufweist, enthält, und
wobei die anorganisch-organische Hybridmatrix ein IPN (interpenetrierende polymere Netzwerke)-Polymer aus zwei sich durchdringenden Polymeren, nämlich einem anorganischen Kondensat und einem organischen Polymer, ist.

Überraschenderweise zeichnet sich die Beschichtung durch eine hohe Antikalkwirkung aus. Bei Verkalkungstest an metallischen Bauteilen konnte gezeigt werden, dass durch Verwendung der oben genannten Antikalkbeschichtung die Verkalkung deutlich reduziert werden kann. So konnte die Kalkablagerung, die bei unbeschichteten Bauteilen nach 300 Testzyklen bei 3,5 g lag, bei beschichteten Bauteilen auf 0,4 g reduziert werden. Ohne sich an eine Theorie binden zu wollen, wird vermutet, dass dies unter anderem auf eine planarisierende Wirkung der Antikalkschicht und auf den geänderten Kontaktwinkel der Schichtoberfläche zurückgeführt werden kann. Der Kontaktwinkel kann durch die Antikalkbeschichtung im Vergleich zum unbeschichteten Bauteil, das einen Kontaktwinkel von 48° aufweist, auf 78° erhöht werden.

Überraschenderweise zeichnen sich diese Systeme durch hohe Hydrolysebeständigkeit aus. Da die Schicht nasschemisch aufgetragen werden kann, ist die Herstellung zudem einfach und wirtschaftlich, und es können auch Gegenstände oder Werkstoffe mit komplexer Geometrie mit der Antikalkbeschichtung versehen werden.

Die Antikalkbeschichtung kann zudem nahezu transparent hergestellt werden und es können Zwischenschichten zwischen der Metalloberfläche oder der anorganischen Oberfläche und der Antikalkbeschichtung eingefügt werden. Daher können nach Bedarf durch Aufnahme entsprechender farbgebender Mittel in die Antikalkschicht selbst oder in der optionalen Zwischenschicht Farbeffekte erzeugt werden. Außerdem können die Schichten sehr dünn sein.

Im Folgenden wird die Erfindung im Einzelnen erläutert.

Als erfindungsgemäß zu beschichtender Gegenstand oder Werkstoff mit mindestens einer Metalloberfläche oder anorganischen Oberfläche eignen sich alle Gegenstände oder Werkstoffe, die aus einem Metall oder einem anorganischen Material bestehen oder mindestens eine Metalloberfläche oder anorganische Oberfläche umfassen, z. B. Gegenstände oder Werkstoffe aus einem anderen Material, das auf mindestens einer Oberfläche mit einer Metallschicht oder anorganischen Schicht oder einem Metallbauteil oder einem anorganischen Bauteil versehen ist.

Metall schließt in dieser Anmeldung immer auch Metalllegierungen ein. Unter anorganischen Oberflächen werden hier alle anorganischen Oberflächen verstanden, die sich von Metalloberflächen unterscheiden. Bevorzugte Beispiele für anorganische Oberflächen sind Oberflächen aus Keramik oder einem mineralischen Material. Beispiele für Gegenstände oder Werkstoffe mit mineralischer Oberfläche sind Gesteine, wie Kies oder Schotter, und Sand.

Bei dem Gegenstand oder Werkstoff mit Metalloberfläche oder anorganischer Oberfläche kann es sich z. B. um Halbzeuge, wie Platten, Bleche, Stangen oder Drähte, Gestein, Partikel, Bauteile oder Fertigprodukte, wie Kessel, Tanks und insbesondere Rohre, Sandkontrollsysteme und Ventile bzw. Sicherheitsventile, handeln. Der Gegenstand oder Werkstoff kann auf der Metalloberfläche oder der anorganischen Oberfläche vollständig mit der Antikalkbeschichtung versehen werden. Natürlich ist es auch möglich, nur einzelne Bereiche oder Teile der Metalloberfläche oder der anorganischen Oberfläche mit der Antikalkschicht zu versehen, wenn z. B. nur bestimmte Bereiche eines entsprechenden Schutzes bedürfen. Beispielsweise kann es bei Gegenständen wie Kesseln, Tanks, Rohrleitungen und Ventilen, insbesondere Sicherheitsventilen, in der Regel ausreichen, wenn die Innenoberflächen bzw. die mit Wasser oder mit Wasser enthaltenden Medien in Kontakt kommenden Oberflächen mit der Antikalkbeschichtung versehen werden.

Beispiele für geeignete Metalle für die Metalloberfläche des Gegenstands oder Werkstoffs sind Aluminium, Titan, Zinn, Zink, Kupfer, Chrom oder Nickel, einschließlich verzinkter, verchromter oder emaillierter Oberflächen. Beispiele für Metalllegierungen sind insbesondere Stahl bzw. Edelstahl, Aluminium-, Magnesium- und Kupferlegierungen wie Messing und Bronze. Besonders bevorzugt werden metallische Oberflächen aus Stahl, Edelstahl, verzinktem, verchromtem oder emailliertem Stahl oder Titan verwendet. Die Keramikoberfläche kann aus jeder gewöhnlichen Keramik sein, z.B. eine übliche Keramik auf Basis der Oxide SiO₂, Al₂O₃, ZrO₂ oder MgO oder der entsprechenden Mischoxide.

Die metallische oder anorganische Oberfläche kann eine ebene oder eine strukturierte Oberfläche aufweisen. Die Geometrie des Gegenstands oder Werkstoffs bzw. der Metall- oder anorganischen Oberfläche kann einfach, z. B. ein einfaches Blech, aber auch komplex, z. B. mit Kanten, Rundungen, Erhebungen oder Vertiefungen, sein. Vorzugsweise wird die metallische oder anorganische Oberfläche vor dem Auftrag der Antikalkbeschichtung gereinigt und von Fett und Staub befreit. Vor der Beschichtung kann auch eine Oberflächenbehandlung, z. B. durch Coronaentladung, durchgeführt werden. Zwischen der Metalloberfläche oder anorganischen Oberfläche und der Antikalkbeschichtung kann auch eine Zwischenschicht, z.B. eine haftvermittelnde Schicht oder eine farbige Schicht zur Erzielung optischer Effekte aufgebracht werden.

In einer bevorzugten Ausführungsform umfasst die Schicht umfassend eine anorganisch-organische Hybridmatrix ferner mindestens einen Füllstoff oder mindestens ein Pigment. Bei den Füllstoffen oder Pigmenten handelt es sich um Partikel. Die Partikel können jede beliebige Form aufweisen. Sie können z. B. kugelförmig, blockförmig oder plättchenförmig sein. Dem Fachmann ist bekannt, dass die Partikel häufig eine mehr oder weniger unregelmäßige Form besitzen können, z. B. wenn sie als Aggregate vorliegen. Sofern keine Vorzugsrichtungen vorliegen, wird zur Größenbestimmung häufig die Form einer Kugel unterstellt. Bei plättchen- oder schuppenförmigen Partikeln liegen zwei Vorzugsrichtungen vor.

Es ist besonders bevorzugt, dass der Durchmesser der Füllstoff- oder Pigmentpartikel oder, bei plättchenförmiger Geometrie der Füllstoff- oder Pigmentpartikel, die Dicke der Füllstoff- oder Pigmentpartikel kleiner ist als die Schichtdicke der Kompositschicht. Die Größe der Füllstoffe oder Pigmente kann abhängig von der verwendeten Antikalkbeschichtung in breiten Umfang variieren. Zweckmäßigerweise liegt der Durchmesser der eingesetzten Füllstoffe und Pigmente im Bereich von 1 bis 20 µm, bevorzugter von 1,5 bis 15 µm, besonders bevorzugt von 2 bis 10 µm und insbesondere von 2,5 bis 6 µm.

Unter dem Durchmesser für nicht plattchenförmige Füllstoffe oder Pigmente, also insbesondere Partikel ohne Vorzugsrichtungen, wird hier der mittlere Teilchendurchmesser bezogen auf das Volumenmittel (d₅₀-Wert) verstanden. Dieser Wert kann z.B. laseroptisch mit dynamischer Laserlichtstreuung, z.B. mit einem UPA (Ultrafine Particle Analyzer, Leeds Northrup) bestimmt werden.

Die Partikelgrößen von plättchenförmigen Füllstoffen oder Pigmenten, d.h. die Dicke und Durchmesser, können z.B. mittels Lichtmikroskopie durch optische Bildauswertung bestimmt werden. Da es sich um plättchenförmige Teilchen handelt, bezieht sich Durchmesser auf den lateralen Durchmesser oder den Äquivalentdurchmesser des projektionsflächengleichen Kreises in stabiler Teilchenlage. Dicke und Durchmesser bedeuten auch hier die mittlere Dicke oder den mittleren Durchmesser bezogen auf das Volumenmittel (d₅₀-Wert).

Als Füllstoff oder Pigment eignen sich alle üblichen, dem Fachmann bekannten Füllstoffe oder Pigmente. Der Füllstoff oder das Pigment ist bevorzugt ausgewählt ist aus mindestens einem von abrasiven Füllstoffen, Festschmierstoffen und Farbpigmenten. Es können ein Füllstoff oder ein Pigment oder Mischungen von zwei oder mehr Füllstoffen und/oder Pigmenten eingesetzt werden. Es können auch Mischungen von Füllstoffen oder Pigmenten aus dem gleichen Material, die sich z. B. in Größe und/oder Partikelform unterscheiden, verwendet werden. Es können auch Mischungen von mindestens einem abrasiven Füllstoff und mindestens einem Antischmierstoff, von mindestens einem abrasiven Füllstoff und mindestens einem Farbpigment, von mindestens einem Antischmierstoff und mindestens einem Farbpigment oder eine Mischung von mindestens einem abrasiven Füllstoff, mindestens einem Antischmierstoff und mindestens einem Farbpigment verwendet werden.

Die eingesetzte Schicht umfasst eine anorganisch-organische Hybridmatrix. Durch die bevorzugte Kombination dieser Matrix mit den darin enthaltenen einen oder mehreren Füllstoffen oder Pigmenten ergibt sich eine bevorzugt eingesetzte Kompositschicht, die überraschenderweise eine hervorragende Antikalkwirkung aufweist, insbesondere wenn der Füllstoff oder das Pigment ausgewählt ist aus einem abrasiven Füllstoff, einem Antischmierstoff, einem Farbpigment und einer der vorstehend genannten Kombinationen dieser Füllstoffe oder Pigmente.

Füllstoffe aus einem abrasiven Material sind dem Fachmann bekannt und werden z.B. als Schleifmittel verwendet. Bevorzugt sind transparente abrasive Füllstoffe. Die eingesetzten abrasiven Füllstoffe weisen auf Basis der Mohsschen Härteskala bevorzugt eine Mohs-Härte von mindestens 7 und bevorzugter > 7 auf. Der abrasive Füllstoff ist bevorzugt ein Füllstoff aus einem Hartstoff. Eine allgemeine Übersicht und für die vorliegende Erfindung geeignete Beispiele von abrasiven Materialien bzw. Hartstoffen finden sich z.B. in Ullmanns Encyclopädie der technischen Chemie, 4. Aufl., Bd. 20, "Schleifen und Schleifmittel", S. 449-455, und Bd. 12, "Hartstoffe (Einteilung)", S. 523-524, Verlag Chemie, Weinheim New York, 1976.

Beispiele für Hartstoffe sind Carbide, Nitride, Boride, Oxycarbide oder Oxynitride von Übergangsmetallen oder Halbmetallen, wie von Si, Ti, Ta, W und Mo, z.B. TiC, WC, TiN, TaN, TiB₂, MoSi₂, Hartstoff-Mischkristalle, wie TiC-WC oder TiC-TiN, Doppelcarbide und Komplexcarbide, wie Co₃W₃C und Ni₃W₃C, und intermetallische Verbindungen, z.B. aus den Systemen W-Co oder Mo-Be, natürlicher oder synthetischer Diamant, Korund (Al₂O₃), wie z.B. Schmirgel, Schmelzkorunde oder Sinterkorunde, natürliche oder synthetische Edelsteine, wie Saphir, Rubin oder Zirkon, Bor, kubisches Bornitrid, Borcarbid (B₄C), Siliciumcarbid (SiC) und Siliciumnitrid (Si₃N₄), Quarz, Glas bzw. Glaspulver. Beispiele für einsetzbare abrasionsfeste Füllstoffe sind plättchenförmiger Al₂O₃, plättchenförmiges SiO₂, TiO₂ und dergleichen.

Bevorzugt eingesetzte Hartstoffe sind Carbide, Nitride oder Boride von Übergangsmetallen, natürlicher oder synthetischer Diamant, Korund und plättchenförmiger Korund, natürliche oder synthetische Edelsteine, Bor, Bornitrid, Borcarbid, Siliciumcarbid, Siliciumnitrid und Aluminiumnitrid, wobei die nichtmetallischen bevorzugt sind. Besonders geeignete Hartstoffe sind Korund, Siliciumcarbid und Wolframcarbid.

Ferner geeignet sind Pigmente bzw. Füllstoffe aus einem Festschmierstoff. Solche Festschmierstoffe sind dem Fachmann bekannt und werden z.B. als Zusatz in unterschiedlichsten Anwendungsbereichen verwendet. Besonders geeignete Beispiele für Füllstoffe bzw. Pigmente aus einem Festschmierstoff sind PTFE-Pigmente, Graphit-Pigmente, Molybdändisulfid-Pigmente und Bornitrid-Pigmente. Es können auch Metalloxide verwendet werden. Der Füllstoff aus einem Festschmierstoff ist bevorzugt ein anorganischer Füllstoff.

Geeignete Farbpigmente sind alle üblichen und dem Fachmann bekannten und in der Regel im Handel erhältlich. Beispiele sind Weißpigmente, z.B. TiO₂, Schwarzpigmente, z.B. Ruß, komplexe Eisenmischoxide, Buntpigmente für alle sichtbaren Farben und Glimmerpigmente bzw. Interferenz- oder Effektpigmente. Details finden sich z.B. in G. Pfaff, "Industrial Inorganic Pigments" Wiley VCH, 2008 oder H. Endriss, "Aktuelle anorganische Buntpigmente", Verlag Vincentz, 1997. Bei den Pigmenten kann es sich z.B. um Oxide, z.B. Spinelle, Rutile, Perowskite und Silikate, Sulfide, Oxynitride, Nitride wie BN, Carbide wie SiC oder elementare Formen, z.B. Russ und Kohlenstoff, handeln. Effektpigmente auf Glimmerbasis sind z.B. die bekannten Iriodin®-Pigmente der Fa. Merck. Keramische Farbpigmente sind wegen Ihrer Temperaturstabilität besonders geeignet.

Sofern eingesetzt, kann die Menge an Füllstoffen oder Pigmenten in der Schicht umfassend eine anorganisch-organische Hybridmatrix je nach Verwendungszweck in weiten Bereichen variieren. In der Regel können aber beim optionalen Einsatz der Füllstoffe oder Pigmente bevorzugte Ergebnisse erzielt werden, wenn der Anteil an Füllstoffen oder Pigmenten in der Kompositschicht im Bereich von 1 bis 35 Gew.-%, bevorzugt 1 bis 10 Gew.-% und besonders bevorzugt 1,5 bis 3 Gew.-%, bezogen auf das Gesamtgewicht der fertigen Kompositschicht, liegt.

Die fertige Schicht umfassend eine anorganisch-organische Hybridmatrix und gegebenenfalls einen oder mehrere Füllstoffe oder Pigmente kann nach thermischer Verdichtung z. B. eine Schichtdicke bis zu 20 µm, besonders bevorzugt bis zu 10 µm aufweisen, ohne dass bei der Trocknung und beim Verdichten Rissbildung auftritt. In der Regel beträgt die Schichtdicke dieser Schicht mindestens 1 µm, bevorzugt mindestens 2 µm. Die Schichtdicke kann z. B. im Bereich von 3 bis 8 µm liegen.

Für die nachstehend beschriebene Herstellung der Schicht können Silane der allgemeinen Formel (I)

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, eingesetzt werden.

Es folgen Erläuterungen zu den geeigneten Silanen der Formel (I). Sofern nicht anders angegeben gelten die Angaben einschließlich der Angaben zu den Hydrolyse- und Kondensationsbedingungen genauso für Silane der Formeln (I) und (II).

Unter den obigen Silanen der allgemeinen Formel (I) befindet sich bevorzugt mindestens ein Silan, in dessen allgemeiner Formel n den Wert 1 oder 2 aufweist. Besonders bevorzugt werden mindestens zwei Silane der allgemeinen Formel (I) in Kombination eingesetzt. In diesen Fällen werden diese Silane bevorzugt in einem solchen Verhältnis eingesetzt, dass der Durchschnittswert von n (auf molarer Basis) 0,2 bis 1,5, vorzugsweise 0,5 bis 1,0, beträgt. Besonders bevorzugt ist ein Durchschnittswert von n im Bereich von 0,6 bis 0,8.

In der allgemeinen Formel (I) sind die Gruppen X, die gleich oder verschieden voneinander sind, hydrolysierbare Gruppen oder Hydroxylgruppen. Konkrete Beispiele für hydrolysierbare Gruppen X sind Halogenatome (insbesondere Chlor und Brom), Cyanate und Isocyanate, Alkoxygruppen und Acyloxygruppen mit bis zu 6 Kohlenstoffatomen. Besonders bevorzugt werden Alkoxygruppen, insbesondere C1-4-Alkoxygruppen wie Methoxy, Ethoxy, n-Propoxy und i-Propoxy. Vorzugsweise sind die Gruppen X in einem Silan identisch, wobei besonders bevorzugt Methoxy- oder Ethoxygruppen eingesetzt werden.

Bei den Gruppen R in der allgemeinen Formel (I), die im Falle von n = 2 gleich oder identisch sein können, handelt es sich um Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen. Konkrete Beispiele für derartige Gruppen sind Methyl, Ethyl, n-Propyl, i-Propyl, n-Butyl, sek.-Butyl und tert.-Butyl, Vinyl, Allyl und Propargyl, Phenyl, Tolyl und Benzyl. Die Gruppen können übliche Substituenten aufweisen, vorzugsweise tragen derartige Gruppen aber keinen Substituenten. Bevorzugte Gruppen R sind Alkylgruppen mit 1 bis 4 Kohlenstoffatomen, insbesondere Methyl und Ethyl, sowie Phenyl.

Es ist bevorzugt, wenn mindestens zwei Silane der allgemeinen Formel (I) eingesetzt werden, wobei in einem Fall n = 0 und im anderen Fall n = 1 ist. Derartige Silan-Mischungen umfassen zum Beispiel mindestens ein Alkyltrialkoxysilan (z.B. (M)ethyltri(m)ethoxysilan) und ein Tetraalkoxysilan (z.B. Tetra(m)ethoxysilan). Eine besonders bevorzugte Kombination für die Ausgangssilane der Formel (I) ist Methyltri(m)ethoxysilan und Tetra(m)ethoxysilan. Eine besonders bevorzugte Kombination für die Ausgangssilane der Formel (I) ist Methyltri(m)ethoxysilan und Tetra(m)ethoxysilan. (M)ethoxy bedeutet Methoxy oder Ethoxy.

Die Hydrolyse und Kondensation der hydrolysierbaren Ausgangsverbindungen erfolgt bevorzugt nach dem Sol-Gel-Verfahren. Beim Sol-Gel-Verfahren werden die hydrolysierbaren Verbindungen mit Wasser, gewöhnlich in Gegenwart von sauren oder basischen Katalysatoren hydrolysiert und zumindest teilweise kondensiert. Die saure Hydrolyse und Kondensation erfolgt bevorzugt in Gegenwart saurer Kondensationskatalysatoren (z.B. Salzsäure, Phosphorsäure oder Ameisensäure) z. B. bei einem pH-Wert von vorzugsweise 1 bis 3. Das sich bildende Sol kann durch geeignete Parameter, z.B. Kondensationsgrad, Lösungsmittel oder pH-Wert, auf die für die Beschichtungszusammensetzung gewünschte Viskosität eingestellt werden.

Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Es wird nachstehend darauf verwiesen, dass die optionalen und bevorzugten Füllstoffe oder Pigmente bevorzugt in diese Beschichtungssuspension oder -lösung oder dem Sol der Matrix eindispergiert werden, um die Beschichtungszusammensetzung zu bilden. Es ist aber auch möglich, die Füllstoffe oder Pigmente mit den hydrolysierbaren Verbindungen zu kombinieren und die Hydrolyse und/oder Kondensation in Anwesenheit der Füllstoffe oder Pigmente auszuführen. Der Füllstoff oder das Pigment kann z. B. direkt als Pulver oder als Suspension oder Aufschlämmung in einem organischen Lösungsmittel zur Beschichtungszusammensetzung gegeben werden.

Die für die Antikalkbeschichtung eingesetzte Schicht umfasst eine anorganisch-organische Hybridmatrix. Hierbei handelt es sich um eine Matrix aus zwei sich durchdringenden Polymeren, nämlich einem anorganischen Kondensat, vorzugsweise einem anorganischen Heterokondensat, und einem rein organischen Polymer. Solche anorganisch-organische Hybridsysteme werden auch als IPN-Polymere (interpenetrierende polymere Netzwerke) bezeichnet. Die sich durchdringenden Polymere können rein physikalisch gemischt sein, sind aber bevorzugt kovalent miteinander verknüpft.

Die Herstellung solcher anorganisch-organischen Hybridmatrices ist dem Fachmann bekannt. Bevorzugt handelt es sich um eine Matrix, die z.B. nach Verfahren und mit Materialien hergestellt werden, wie in DE-A-102006018938, DE-A-2007059423 oder DE 102008011413 beschrieben.

Zur Herstellung dieser Schicht wird bevorzugt eine Beschichtungszusammensetzung, die ein anorganisches Kondensat und ein organisches Monomer, Oligomer oder Polymer, das mindestens eine polymerisierbare Gruppe umfasst, umfasst, auf die Metalloberfläche oder anorganische Oberfläche aufgetragen und unter Bildung der Schicht gehärtet, insbesondere thermisch gehärtet. Sofern die Metalloberfläche oder anorganische Oberfläche eine oder mehrere Zwischenschichten aufweisen soll, werden diese auf übliche Weise aufgebracht und die vorstehend genannte Schicht entsprechend auf diese Zwischenschicht(en) aufgebracht.

Das Kondensat ist ein Heterokondensat, das ein Metallo- oder Borosiloxan ist und Heteroatomeinheiten von Heteroatomen ausgewählt aus B, AI, Ga, In, Tl, Ge, Ga, Sn, Pb, Ti, Zr, Hf, Sc, Y und La, die über Sauerstoffbrücken in das Siloxangerüst eingebaut sind, und Siloxaneinheiten, bei denen das Siliziumatom eine nicht hydrolysierbare organische Gruppe, bevorzugt eine nicht hydrolysierbare organische polymerisierbare Gruppe, aufweist, enthält.

Das Heterokondensat wird aus Siliziumverbindungen und Metall- oder Borverbindungen gebildet, insbesondere durch Hydrolyse und Kondensation, vorzugsweise nach dem Sol-Gel-Verfahren wie vorstehend beschrieben. Als Si-Komponente wird mindestens eine hydrolysierbare Siliziumverbindung mit einer nicht hydrolysierbaren organischen Gruppe verwendet, die bevorzugt einen polymerisierbaren Rest aufweist.

Als hydrolysierbare Siliziumverbindung mit einer nicht hydrolysierbaren organischen Gruppe können die vorstehend genannten Silane der allgemeinen Formel (I) eingesetzt werden. Bevorzugt ist der Einsatz mindestens einer hydrolysierbaren Siliziumverbindung mit einer nicht hydrolysierbaren organischen polymerisierbaren Gruppe, z.B. eine Verbindung der allgemeinen Formel (II)

(Rx)_{b}R_{c}SiX_{4-b-c} (II)

worin die Reste Rx gleich oder verschieden sind und hydrolytisch nicht abspaltbare Gruppen darstellen, die mindestens eine polymerisierbare Gruppe umfassen, die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen, b den Wert 1, 2 oder 3 hat und c den Wert 0, 1 oder 2 hat, wobei die Summe (b+c) 1, 2 oder 3 ist. In der Formel (II) ist b bevorzugt 1 und c bevorzugt 0, so dass das polymeriserbare Organosilan der Formel (II) vorzugsweise (Rx)SiX₃ oder (Rx)R_{c}SiX_{3-c} ist.

Geeignete und bevorzugte Beispiele für hydrolytisch abspaltbare bzw. hydrolysierbare Gruppen X und die hydrolytisch nicht abspaltbaren Reste R sind dieselben, die für die Gruppen X bzw. R in der Formel (I) genannt wurden.

Die Reste Rx umfassen mindestens eine polymerisierbare Gruppe, über die eine Vernetzung des sich bildenden Kondensats untereinander oder mit den zugegebenen organischen Monomeren, Oligomeren oder Polymeren möglich ist. Beispiele für die polymerisierbare Gruppe sind Epoxid, wie z. B. Glycidyl oder Glycidyloxy, Hydroxy, Amino, Monoalkylamino, Dialkylamino, gegebenenfalls substituiertes Anilino, Amid, Carboxy, Alkenyl, Alkinyl, Acryl, Acryloxy, Methacryl, Methacryloxy, Mercapto, Cyano, Isocyanato, Aldehyd, Keto, Alkylcarbonyl, Säureanhydrid und Phosphorsäure. Diese Substituenten sind über zweiwertige Brückengruppen, insbesondere Alkylen- oder Arylen-Brückengruppen, die durch Sauerstoff- oder -NH-Gruppen unterbrochen sein können, an das Siliziumatom gebunden. Die Brückengruppen enthalten z. B. 1 bis 18, vorzugsweise 1 bis 8 und insbesondere 1 bis 6 Kohlenstoffatome. Bevorzugt ist die Brückengruppe eine Alkylen-, insbesondere eine Propylengruppe. Bevorzugte polymerisierbare Gruppen, über die eine Vernetzung möglich ist, sind Vinyl, Acryl oder Acryloxy, Methacryl oder Methacryloxy.

Konkrete Beispiele sind Glycidyloxypropyltrimethoxysilan (GPTS), γ-Glycidyloxypropyltriethoxysilan (GPTES), 3-Isocyanatopropyltriethoxysilan, 3-Isocyanatopropyldimethylchlorsilan, 3-Aminopropyltrimethoxysilan (APTS). Bevorzugte Beispiele sind Vinylsilane, Acrylsilane und Methacrylsilane, wie Vinyltriethoxysilan, (Meth)acryloxyalkyltrimethoxysilan und (Meth)acryloxyalkyltriethoxysilan, insbesondere (Meth)acryloxypropyltrimethoxysilan und (Meth)acryloxypropyltriethoxysilan, (Meth)acryloxypropylmethyldimethoxysilan, (Meth)acryloxyethyltrimethoxysilan und (Meth)acryloxyethylmethyldimethoxysilan, wobei Methacryloxypropyltrimethoxysilan besonders bevorzugt ist.

In bevorzugten Ausführungsformen werden neben der mindestens einen Siliziumverbindung mit einer polymerisierbaren Gruppe eine oder mehrere weitere Siliziumverbindungen als Si-Komponente verwendet, z. B. Silane der Formel (I), wobei es sich um hydrolysierbare Silane mit mindestens einer nicht hydrolysierbaren organischen Gruppe und/oder um hydrolysierbare Silane ohne nicht hydrolysierbare organische Gruppen handeln kann.

Als weitere Komponente für das Heterokondensat wird eine zusätzliche Verbindung, insbesondere eine hydrolysierbare Verbindung, von einem Element ausgewählt aus B, AI, Ga, In, Tl, Ge, Ga, Sn, Pb, Ti, Zr, Hf, Sc, Y und La, eingesetzt. Titanverbindungen sind bevorzugt. Die Verbindungen können einzeln oder als Mischung aus zwei oder mehr dieser Elemente eingesetzt werden.

Bei der Metall- oder Borverbindung kann es sich um eine Verbindung der Formel (III) handeln

MXₐ (III)

worin M B, AI, Ga, In, Tl, Ge, Ga, Sn, Pb, Ti, Zr, Hf, Sc, Y und La ist, X wie in Formel (I) definiert ist, einschließlich der bevorzugten Beispiele, wobei zwei Gruppen X durch eine Oxogruppe ersetzt sein können, und a der Wertigkeit des Elements entspricht, wobei bei Einsatz von Komplexliganden a auch größer oder bei mehrzähnigen Liganden auch kleiner als die Wertigkeit von M sein kann. Die Wertigkeit von M ist in der Regel 2, 3 oder 4. Gegebenfalls umfasst die Verbindung der Formel (III) auch ein Gegenion. X kann neben den in Formel (I) angegeben Substituenten auch Sulfat, Nitrat, einen Komplexbildner, wie z.B. ein β-Diketon, eine gesättigte oder ungesättigte Carbonsäure oder das Salz davon, eine anorganische Säure oder ein Salz davon und ein Aminoalkohol sein. Die Metall- oder Borverbindung ist bevorzugt eine hydrolysierbare Verbindung. Bevorzugt werden Metall- oder Boralkoxide eingesetzt.

Als Metallverbindungen sind die Alkoxide von Ti, Zr und AI, insbesondere von Ti, bevorzugt. Geeignete Metallverbindungen sind z.B. Ti(OC₂H₅)₄, Ti(O-n- oder i-C₃H₇)₄, Ti(OC₄H₉)₄, TiCl₄, Ti(O-iC₃H₇)₂Cl₂, Hexafluorotitansäure, TiOSO₄, Diisopropoxybis(ethylacetoacetato)titanat, Poly(dibutyltitanat), Tetrakis(diethylamino)titan, Titan-2-ethylhexoxid, Titanbis(triethanolamin)diisopropoxid, Titanchloridtriisopropoxid, Al(OC₂H₅)₃, Al(O-sek.-C₄H₉)₃, AlCl(OH)₂, Al(NO₃)₃, Zr(OC₃H₇)₄, Zirconium-2-ethylhexoxid, BCl₃, B(OCH₃)₃ und SnCl₄, Zr(OC₃H₇)₂(OOC(CH₃)=CH₂)₂, Titanacetylacetonat, Titanoxidbis(pentandionat), Ti(OC₃H₇)₃(OOC(CH₃)=CH₂) und Ti(OC₂H₄)₃(Allylacetoacetat). Von den Metallverbindungen sind Ti(O-iC₃H₇)₄, Ti(OC₄H₉)₄, Titanbis(triethanolamin)diisopropoxid und Ti(OC₃H₇)₃(OOC(CH₃)=CH₂) besonders bevorzugt.

Die Hydrolyse und Kondensation zur Bildung des Heterokondensats wird bevorzugt zweistufig durchgeführt. Dabei wird die hydrolysierbare Siliziumverbindung in einer ersten Stufe durch Vermischung mit Wasser einer Hydrolyse unterworfen. Die Metall- oder Borverbindung wird in einer zweiten Stufe zugesetzt, wenn die Siliziumverbindungen im wesentlichen hydrolysiert worden sind.

Das Molverhältnis von Si-Atomen aller eingesetzten Si-Verbindungen zu den Metallatomen und Boratomen aller eingesetzten vorstehend genannter Metall- und Borverbindungen kann in breiten Bereichen gewählt werden, beträgt aber bevorzugt 10:1 bis 1:3 und bevorzugter 5:1 bis 1:1.

Für die organische Komponente werden ein oder mehrere organische Monomere, Oligomere oder Polymere verwendet, die jeweils eine oder mehrere, bevorzugt mindestens zwei polymerisierbare Gruppen aufweisen. Die polymerisierbare Gruppe ist ausgewählt aus Epoxid-, Vinyl-, Acryl- und Methacrylgruppen. Als Polymere mit freien polymerisierbaren Gruppen eignen sich z. B. Epoxidharze. Bevorzugte Beispiele sind mono-, bi- oder polyfunktionelle Acrylate und Methacrylate.

Konkrete Beispiele sind Diethylenglycoldimethacrylat (DEGMA), Triethylenglycoldimethacrylat (TEGDMA), Bisphenol A-glycidylmethacrylat (BisGMA), Bisphenol A-diacrylat, Diurethandimethacrylat, Urethandimethacrylat (UDMA), Laromer®-Acrylate der BASF, Ebecryl®, Pentaerythrittriacrylat (PETIA), Hexandioldiacrylat, Trimethylolpropantriacrylat, Trimethylolpropantrimethacrylat, Neopentylglycoldimethacrylat, Neopentylglycoldiacrylat, Epoxyacrylatharze, oligomere Methacrylate, wie LR 8862, LR 8907 von BASF, oder oligomere Urethanacrylate, wie UA 19T von BASF.

Die organische Komponente wird bevorzugt nach Zugabe der Metall- oder Borverbindung, bevorzugter nach der Reifung zugegeben. Das Gewichtsverhältnis aller eingesetzten anorganischen Komponenten, einschließlich der darin enthaltenen organischen Gruppen, zu den eingesetzten rein organischen Komponenten kann z.B., bezogen auf die gehärtete Beschichtungszusammensetzung, z.B. 95:5 bis 5:95 und bevorzugt 80:20 bis 20:80 betragen. Optional können die Füllstoffe und/oder Pigmente zur Beschichtungszusammensetzung gegeben werden, analog wie oben beschrieben.

Die Beschichtungszusammensetzung, die ein anorganisches Kondensat und ein organisches Monomer, Oligomer oder Polymer, das mindestens eine polymerisierbare Gruppe umfasst, kann nach dem Aufbringen auf die metallische oder anorganische Oberfläche z.B. thermisch und/oder Einsatz von üblichen Katalysatoren gehärtet werden. Die thermische Härtung kann z. B. bei Temperaturen über 40°C erfolgen. Diese Härtung kann auch bei einem erhöhten Druck erfolgen.

Die Beschichtungszusammensetzung für die eingesetzte Schicht kann in der Lackindustrie übliche Additive enthalten, z. B. die Rheologie und das Trocknungsverhalten kontrollierende Additive, Benetzungs- und Verlaufshilfsmittel, Entschäumer, Tenside, Lösungsmittel, Farbstoffe und Pigmente, insbesondere farbgebende Pigmente oder Effektpigmente. Ferner können handelsübliche Mattierungsmittel, z. B. mikroskalige SiO₂- oder keramische Pulver zugesetzt werden, um mattierte Schichten mit Anti-Fingerprint-Eigenschaften zu erreichen. Sofern eingesetzt, können die Hydrolyse und Polykondensation der Silane in Anwesenheit von Mattierungsmitteln, z. B. mikroskaligen SiO₂- oder keramischen Pulvern erfolgen. Diese können aber auch später zur Beschichtungszusammensetzung zugegeben werden.

Die Beschichtungszusammensetzung für die eingesetzte Schicht kann über die üblichen nasschemischen Beschichtungstechniken aufgetragen werden, z. B. Tauchen, Gießen, Schleudern, Sprühen, Walzenauftrag, Aufstreichen, Rakeln oder Curtain-Coating. Es können auch Druckverfahren, wie z. B. Siebdruck, verwendet werden.

Es können Schichten auf metallischen und auch auf anorganischen Oberflächen erhalten werden, die eine sehr gute Antikalkwirkung, eine hohe hydrolytische Beständigkeit und hohe Abrasionsfestigkeit aufweisen. Sie bilden auch eine hermetisch abschließende Schicht, die auch bei höheren Temperaturen den Sauerstoffzutritt an die metallische oder anorganische Oberfläche verhindert bzw. drastisch reduziert und einen hervorragenden Korrosionsschutz gewährleistet und zudem Verschmutzungen, z. B. durch Fingerabdrücke, Wasser, Öl, Fett, Tenside und Staub, vermeiden hilft.

Gegebenenfalls können zwischen der Metalloberfläche oder anorganischen Oberfläche und der Antikalkbeschichtung ein oder mehrere Zwischenschichten vorgesehen sein, z. B. um die Haftung zu verbessern oder um für einen zusätzlichen Schutz zu sorgen. Gewöhnlich werden hierfür ebenfalls anorganische, glasartige Schichten eingesetzt. Die Zwischenschichten können ebenfalls nasschemisch oder über andere Verfahren, wie z. B. CVD oder PVD, aufgebracht werden, wobei sie gesondert oder bevorzugt gemeinsam mit der Antikalbeschichtung verdichtet werden können. Als Bedingungen zur thermischen Verdichtung können die Bedingungen verwendet werden, die vorstehend für die Antikalkbeschichtung beschrieben wurden, je nach Zusammensetzung können aber auch andere Bedingungen zweckmäßig sein.

Der mit der Antikalkbeschichtung versehene Gegenstand oder Werkstoff mit Metalloberfläche oder anorganischer, insbesondere keramischer oder mineralischer Oberfläche, kann ein Halbzeug, wie Platten, Bleche, Rohre, Stangen oder Drähte, ein Bauteil bzw. Komponente oder ein Fertigprodukt sein. Es kann z.B. für Anlagen, Werkzeuge, Hausgeräte, Elektrobauteile, Maschinen, Fahrzeugteile, insbesondere Automobilbauteile, Produktionsanlagen, Fassaden, Förderwerkzeuge, Sicherheitsventile, Rohrleitungen, Wärmetauscher, oder Teile davon verwendet werden.

Die Antikalkbeschichtung ist insbesondere geeignet für Gegenstände oder Werkstoffe mit Metalloberfläche wie Metallgehäuse von elektronischen Geräten, metallische Bauteile für optische Geräte, metallische Teile von Fahrzeugen im Innen- und Außenbereich, metallische Bauteile im Maschinen- und Anlagenbau, Motoren, metallische Bauteile von medizintechnischen Geräten, metallische Bauteile von Hausgeräten, andere Elektrogeräte und Turbinen, Haushaltsgeräte, wie z. B. Behälter, Messer, metallische Fassadenbauteile, metallische Komponenten von Aufzügen, Teile von Fördereinrichtungen, metallische Teile von Möbeln, Gartengeräte, Landmaschinen, Beschläge, Motorenbauteile und Produktionsanlagen allgemein, und insbesondere für Rohrleitungen, Sandkontrollsysteme und Sicherheitsventile in der Öl- und Gasförderung oder -speicherung.

Sandkontrollsysteme werden bei der Öl- oder Gasförderung eingesetzt, damit Sand oder andere feste Verunreinigungen bei der Förderung zurückgehalten werden. Hierfür enthalten die Sandkontrollsysteme z. B. Kiespackungen (gravel packs), Packungen aus keramischen Partikeln oder Proppants, in der Regel Formkörper aus Sand. Das Antikalkbeschichtungssystem eignet sich überraschenderweise auch zur Beschichtung mineralischer Gegenstände oder Werkstoffe, keramischer Partikel oder Gesteine, wie Kies, Schotter oder Sand, insbesondere für solche Kiespackungen, Packungen aus keramischen Partikeln und Proppants, die als Sandkontrollsysteme eingesetzt werden.

Besonders bevorzugt handelt es sich bei dem Gegenstand mit mindestens einer Metalloberfläche oder anorganischen Oberfläche um eine Speicher- oder Transporteinrichtung für Wasser oder Wasser enthaltende Medien, wobei die Antikalkbeschichtung auf mindestens einer Metalloberfläche oder anorganischen Oberfläche der Speicher- oder Transporteinrichtung aufgebracht werden kann. Bei dieser Speicher- oder Transporteinrichtung handelt es sich bevorzugt um einen Kessel, einen Tank, eine Rohrleitung oder ein Ventil für Wasser oder Wasser enthaltende Medien, wobei eine Rohrleitung und ein Sicherheitsventil besonders bevorzugt sind.

Das Wasser enthaltende Medium ist bevorzugt ein wasserhaltiges Erdöl oder Erdgas. Solche wasserhaltigen Öle und Gase kommen z.B. bei der Öl- oder Gasförderung oder Öl- oder Gasspeicherung vor. Die Speicher- oder Transporteinrichtung ist daher besonders bevorzugt eine Rohrleitung, ein Sandkontrollsystem (gravel pack, proppants) oder ein Ventil, insbesondere ein Sicherheitsventil, in der Öl- oder Gasförderung oder Öl- oder Gasspeicherung. Durch die Antikalkbeschichtung kann die Kalkablagerung in für die Förderung oder Speicherung von Erdöl oder Erdgas verwendeten Öl- oder Gasrohren, in zum Leitungssystem gehörenden Sicherheitsventilen oder Sandkontrollsystemen deutlich verringert oder sogar ganz verhindert werden.

Offenbart wird dementsprechend auch ein Verfahren zum Transportieren oder Speichern von Wasser oder von einem Wasser enthaltenden Medium, bei dem das Wasser oder das Wasser enthaltende Medium durch einen Gegenstand transportiert wird oder in einem Gegenstand gespeichert wird, wobei der Gegenstand auf mindestens einer Metalloberfläche oder anorganischen Oberfläche die beschriebene Antikalkbeschichtung aufweist.

### Referenz 1 (Doppelschichtsystem)

### Basisschicht

25 ml (124,8 mMol) Methyltriethoxysilan (MTEOS) werden mit 7 ml (31,4 mMol) Tetraethoxysilan (TEOS) und 0,8 g (20 mMol) Natriumhydroxid über Nacht (mindestens 12 Stunden) bei Raumtemperatur gerührt, bis sich das gesamte Natriumhydroxid gelöst hat und eine klare gelbe Lösung vorliegt. Anschließend werden 3,2 ml (177,8 mMol) Wasser bei Raumtemperatur langsam zugetropft, wobei sich die Lösung erwärmt. Nach Beendigung der Wasserzugabe wird die klare gelbe Lösung bei Raumtemperatur gerührt, bis sie wieder abgekühlt ist, und anschließend über einen Filter mit einer Porengröße von 0,8 um filtriert.

### Herstellung einer Beschichtungslösung mit Pigmenten

4 g des roten Pigmentes LavaRed® der Firma Merck AG werden in Gegenwart von 8 g Butylglycol als Kompatibilisator/Oberflachenmodifikator und Verlaufsmittel in 80 g des Basisschichtsystems unter kräftigem Rühren dispergiert.

Dabei wird eine agglomeratfreie Dispersion mit einer Viskosität von ca. 15 mPas bei 23°C erreicht, die für Verwendung in einer automatischen Sprühbeschichtungsanlage geeignet ist.

### Deckschichtsystem

65,5 g MTEOS und 19,1g TEOS werden gemischt und in zwei Hälften geteilt. Zur einen Hälfte werden 14,2 g Levasil 300/30 und 0,4 ml HCl (37 %) unter Rühren zugegeben (bis der Klarpunkt erreicht ist). Anschließend wird die zweite Hälfte der Silanmischung zugegeben. Diese Mischung lässt man über Nacht stehen. Zur Aktivierung wird dem Ansatz Wasser zugegeben (10 Gew.%) (einstellen des ROR auf 0,8).

### Auftragung und Aushärtung der Schichten

Basisschicht: Als Basisschicht wird die Beschichtungslösung mit Pigmenten mittels Sprühen so auf ein Metallsubstrat aufgetragen, dass die Nassfilmdicke ca. 15 µm beträgt. Anschließend wird die Schicht je nach verwendetem metallischem Substrat auf 450-550°C ausgeheizt.

Deckschicht: Die Deckschicht wird mittels Sprühen mit einer Nassfilmdicke mit von ca. 10 µm aufgetragen. Anschließend wird die Schicht je nach metallischem Substrat auf 450-550°C ausgeheizt.

### Referenz 2 (Doppelschichtsystem)

Basislack: 25 ml (124,8 mMol) Methyltriethoxysilan (MTEOS) werden mit 7 ml (31,4 mMol) Tetraethoxysilan (TEOS) und 0,8 g (20 mMol) Natriumhydroxid über Nacht (mindestens 12 Stunden) bei Raumtemperatur gerührt, bis sich das gesamte Natriumhydroxid gelöst hat und eine klare gelbe Lösung vorliegt. Anschließend werden 3,2 ml (177,8 mMol) Wasser bei Raumtemperatur langsam zugetropft, wobei sich die Lösung erwärmt. Nach Beendigung der Wasserzugabe wird die klare gelbe Lösung bei Raumtemperatur gerührt, bis sie wieder abgekühlt ist, und anschließend über einen Filter mit einer Porengröße von 0,8 um filtriert.

Pigmentsuspension (a): Eine Mischung von 50 Gew.% Alusion Al₂O₃ (plättchenförmiger Korund, Partikelgröße d₉₀ = 18 µm) in 2-Propanol wird in einem Dispermat über 15 Minuten unter Kühlung bei 20°C homogenisiert, anschließend wird der Gehalt der Suspension durch Eindampfen einer Probe des Endproduktes bestimmt (Feststoffgehalt 40,0 Gew.%). Pigmentsuspension (b): Eine Mischung von 50 Gew.% F1000 Al₂O₃ (Strahlkorund, gebrochen, Partikelgröße 1 bis 10 um) in 2-Propanol wird in einem Dispermat über 10 Minuten unter Kühlung homogenisiert, anschließend wird der Gehalt der Suspension durch Eindampfen einer Probe des Endproduktes bestimmt (40,0 Gew.%).

### Beschichtungslack

Zur Herstellung des Beschichtungslacks werden 0,9 kg des Basislacks vorgelegt und dann 100 g Ethylenglycolmonobutylether zugefügt und gerührt. Unter Rühren werden 30 g Pigmentsuspension (a) und 45 g Pigmentsuspension (b) zugefügt und es wird weitere 20 Minuten gerührt.

### Beschichtung

Nach Filtration über ein 100 µm Filtersieb wird der Beschichtungslack (Einschichter) in einer industriellen Flachspritzanlage bis zu einer Nassfilmdicke von 11 µm auf die in einem handelsüblichen alkalischen Reinigungsbad vorgereinigten Edelstahlteile aufgesprüht und anschließend bei Raumtemperatur für 15 Minuten getrocknet.

Im Anschluss an die Beschichtung werden die beschichteten Teile in einen evakuierbaren Retortenofen eingebracht, in einem ersten Heizschritt bei 200°C in Luft und anschließend in reinem Stickstoff bei 500°C in 1 h gehärtet. Die ausgehärtete Glasschicht hat eine Schichtdicke von 4 um.

### Versuch zur Antikalkwirkung

Die in den Referenzen 1 und 2 hergestellten Metallsubstrate mit Antikalkbeschichtung wurden dem nachfolgenden Test unterzogen. Zum Vergleich wurde der Test auch mit den in den Referenzen 1 und 2 eingesetzten Metallsubstraten ohne Antikalkbeschichtung durchgeführt.

1,23 g Ca(OH)₂ wurden in 1000 ml destilliertem Wasser bei Raumtemperatur gelöst. In die gesättigte Lösung wurde solange CO₂ eingeleitet bis keine CaCO₃ Ausfällung mehr auftritt. Die beschichtete oder unbeschichtete Probe wurde in die Lösung in einem Exsikkator für 3 Tage bei 85°C eingelagert. Um zu gewährleisten, dass die Probe vollständig eingelagert ist, wird täglich die CaCO₃ Suspension aufgefüllt. Nach Ablauf der Einlagerungszeit wurde die Probe entnommen, mit Wasser abgespült und die Schicht und die darauf abgelagerte Menge an CaCO₃ wurden bewertet. Die Bewertung führt zu dem Ergebnis, dass die Schicht vollständig intakt ist. Haftungstests ergeben ein Ergebnis von GT/TT = 0/0. Hinsichtlich der Antikalkwirkung zeigen die unbeschichteten Vergleichsproben nach Abspülen mit Wasser einen deutlichen Kalkrückstand. Die beschichtete Probe zeigt nach Abspülen keine Kalkrückstände.

## Patentansprüche

1. Verwendung einer Beschichtung aus
einer Schicht umfassend eine anorganisch-organische Hybridmatrix,
wobei die Schicht umfassend eine anorganisch-organische Hybridmatrix erhältlich ist durch nasschemisches Aufbringen einer Beschichtungszusammensetzung auf mindestens eine Metalloberfläche oder anorganische Oberfläche des Gegenstands oder Werkstoffs und Härten der Beschichtungszusammensetzung, wobei die Beschichtungszusammensetzung ein Heterokondensat und ein organisches Monomer, Oligomer oder Polymer, das mindestens eine polymerisierbare Gruppe ausgewählt aus Epoxid-, Vinyl-, Acryl- und Methacrylgruppen umfasst, umfasst, und das Heterokondensat ein Metallo- oder Borosiloxan ist und Heteroatomeinheiten von Heteroatomen ausgewählt aus B, AI, Ga, In, Tl, Ge, Ga, Sn, Pb, Ti, Zr, Hf, Sc, Y und La, die über Sauerstoffbrücken in das Siloxangerüst eingebaut sind, und Siloxaneinheiten, bei denen das Siliziumatom eine nicht hydrolysierbare organische Gruppe, bevorzugt eine nicht hydrolysierbare organische polymerisierbare Gruppe, aufweist, enthält,
wobei die anorganisch-organische Hybridmatrix ein IPN (interpenetrierende polymere Netzwerke)-Polymer aus zwei sich durchdringenden Polymeren, nämlich einem anorganischen Kondensat und einem organischen Polymer, ist,
als Antikalkbeschichtung auf mindestens einer Metalloberfläche oder anorganischen Oberfläche eines Gegenstands oder Werkstoffs.

2. Verwendung nach Anspruch 1, **dadurch gekennzeichnet, dass** die Schicht umfassend eine anorganisch-organische Hybridmatrix ferner einen bzw. ein oder mehrere Füllstoffe oder Pigmente umfasst, wobei der Füllstoff oder das Pigment bevorzugt ausgewählt ist aus mindestens einem von abrasiven Füllstoffen, Festschmierstoffen und Farbpigmenten.

3. Verwendung nach Anspruch 2, **dadurch gekennzeichnet, dass** der volumengemittelte Teilchendurchmesser (d₅₀-Wert) des Füllstoffs oder des Pigments im Bereich von 1 bis 20 µm liegt.

4. Verwendung nach irgendeinem der Ansprüche 1 bis 3, **dadurch gekennzeichnet, dass** der Gegenstand oder Werkstoff mit Metalloberfläche oder anorganischer Oberfläche eine Speicher- oder Transporteinrichtung für Wasser oder Wasser enthaltende Medien ist, wobei das Wasser enthaltende Medium bevorzugt wasserhaltiges Erdöl oder Erdgas ist, und/oder der Gegenstand oder Werkstoff ein Kessel, ein Tank, ein Sandkontrollsystem, eine Rohrleitung oder ein Ventil, insbesondere ein Sicherheitsventil ist, die bevorzugt für die Öl- oder Gasförderung oder Öl- oder Gasspeicherung eingesetzt werden.

5. Verwendung nach irgendeinem der Ansprüche 1 bis 4, **dadurch gekennzeichnet, dass** die Schichtdicke der Schicht umfassend eine anorganisch-organische Hybridmatrix nicht größer als 20 µm ist oder zwischen der Metalloberfläche oder anorganischen Oberfläche und der Antikalkbeschichtung eine oder mehrere Zwischenschichten angeordnet sind.

6. Verwendung nach irgendeinem der Ansprüche 2 bis 5, **dadurch gekennzeichnet, dass** der Anteil an Füllstoffen und/oder Pigmenten in der Schicht umfassend eine anorganisch-organische Hybridmatrix im Bereich von 1 bis 35 Gew.-%, bezogen auf das Gesamtgewicht der fertigen Schicht, liegt.

## Claims

1. Use of a coating comprising
a layer comprising an inorganic-organic hybrid matrix,
wherein the layer comprising an inorganic-organic hybrid matrix is obtainable by wet-chemical application of a coating composition on at least one metal surface or inorganic surface of the object or material and hardening the coating composition, wherein the coating composition comprises a heterocondensate and an organic monomer, oligomer or polymer which comprises at least one polymerisable group selected from epoxy, vinyl, acrylic and methacrylic groups, and the heterocondensate is a metallosiloxane or borosiloxane and contains heteroatom units of heteroatoms selected from B, Al, Ga, In, Tl, Ge, Ga, Sn, Pb, Ti, Zr, Hf, Sc, Y and La, which are incorporated in the siloxane skeleton by means of oxygen bridges, and siloxane units, in which the silicon atom has a non-hydrolysable organic group, preferably a non-hydrolysable organic polymerisable group,
wherein the inorganic-organic hybrid matrix is an IPN (interpenetrating polymer networks) polymer formed of two interpenetrating polymers, namely an inorganic condensate and an organic polymer,
as an anti-limescale coating on at least one metal surface or inorganic surface of an object or material.

2. Use according to claim 1, **characterised in that** the layer comprising an inorganic-organic hybrid matrix furthermore comprises one or one or more fillers or pigments, wherein the filler or the pigment is preferably selected from at least one of abrasive fillers, solid lubricants and colour pigments.

3. Use according to claim 2, **characterised in that** the particle diameter (d₅₀ value), averaged with respect to the volume, of the filler or the pigment is within the range of 1 to 20 µm.

4. Use according to any one of claims 1 to 3, **characterised in that** the object or material with a metal surface or inorganic surface is a storage or transport device for water or media containing water, wherein the medium containing water is preferably water-containing crude oil or natural gas, and/or the object or material is a boiler, a tank, a sand control system, a pipeline or a valve, especially a safety valve, which are preferably used for conveying oil or gas or storing oil or gas.

5. Use according to any one of claims 1 to 4, **characterised in that** the layer thickness of the layer comprising an inorganic-organic hybrid matrix is no greater than 20 µm or one or more intermediate layers are arranged between the metal surface or inorganic surface and the anti-limescale coating.

6. Use according to any one of claims 2 to 5, **characterised in that** the proportion of fillers and/or pigments in the layer comprising an inorganic-organic hybrid matrix is in the range from 1 to 35 % by weight, based on the total weight of the finished layer.

## Revendications

1. Utilisation d'un revêtement constitué d'une couche d'une matrice hybride organico-inorganique,
où la couche comprend une matrice hybride organico-inorganique pouvant être obtenue par application chimique par voie humide d'une composition de revêtement sur au moins une surface métallique ou une surface inorganique de l'objet ou du matériau et par durcissement de la composition de revêtement, la composition de revêtement comprenant un hétéro-condensat et un monomère, oligomère ou polymère organique qui comprend au moins un groupe polymérisable choisi parmi les groupes époxyde, vinyle, acrylique et méthacrylique, et l'hétéro-condensat étant un métallo-siloxane ou borosiloxane et contenant des motifs hétéro-atomiques d'hétéroatomes choisis parmi B, Al, Ga, In, Tl, Ge, Ga, Sn, Pb, Ti, Zr, Hf, Sc, Y et La qui sont insérés par le biais de ponts oxygène dans le squelette de siloxane, et des motifs siloxane, dans lesquels l'atome de silicium comprend un groupe organique non hydrolysable, de préférence un groupe polymérisable organique non hydrolysable,
où la matrice hybride organico-inorganique est un polymère IPN (à réseaux polymères interpénétrants) constitués de deux polymères s'enchevêtrant, à savoir un condensat inorganique et un polymère organique,
en tant que couche anti-calcaire sur au moins une surface métallique ou une surface inorganique d'un objet ou matériau.

2. Utilisation selon la revendication 1, **caractérisée en ce que** la couche comprenant une matrice hybride organico-inorganique comprend en outre un et/ou un ou plusieurs charges ou pigments, la charge ou le pigment étant choisis de préférence à partir d'au moins l'un parmi les charges abrasives, les lubrifiants solides et les pigments colorés.

3. Utilisation selon la revendication 2, **caractérisée en ce que** le diamètre moyen en volume des particules (valeur d₅₀) de charge ou de pigment est compris dans la plage de 1 à 20 µm.

4. Utilisation selon l'une quelconque des revendications 1 à 3, **caractérisée en ce que** l'objet ou le matériau ayant une surface métallique ou une surface inorganique est un système de stockage ou de transport pour l'eau ou des milieux contenant de l'eau, le milieu contenant de l'eau étant de préférence du pétrole ou du gaz naturel contenant de l'eau et/ou l'objet ou le matériau étant une cuve, un réservoir, un système de contrôle du sable, une conduite tubulaire ou une soupape, en particulier une soupape de sécurité, mis en oeuvre de préférence pour le transport du pétrole ou du gaz ou le stockage du pétrole ou du gaz.

5. Utilisation selon l'une quelconque des revendications 1 à 4, **caractérisée en ce que** l'épaisseur de couche de la couche comprenant une matrice hybride organico-inorganique n'est pas supérieure à 20 µm ou une ou plusieurs couches intermédiaires sont disposées entre la surface métallique ou la surface inorganique et le revêtement anti-calcaire.

6. Utilisation selon l'une quelconque des revendications 2 à 5, **caractérisée en ce que** la proportion de charges et/ou de pigments dans la couche comprenant une matrice hybride organico-inorganique est comprise dans la plage de 1 à 35 % en poids, par rapport au poids total de la couche finie.
